(19) Europäisches Patentamt
European Patent Office
Office européen des brevets

(11) **EP 3 310 646 B1**

(12) **EUROPEAN PATENT SPECIFICATION**

(45) Date of publication and mention
of the grant of the patent:
**17.11.2021 Bulletin 2021/46**

(21) Application number: **16741680.9**

(22) Date of filing: **17.06.2016**

(51) Int Cl.:
**B62M 9/08** *(2006.01)*          **B62M 9/00** *(2006.01)*

(86) International application number:
**PCT/IB2016/053600**

(87) International publication number:
**WO 2016/203433 (22.12.2016 Gazette 2016/51)**

(54) **GEARWHEEL FOR MOTION TRANSMISSION SYSTEMS ONTO CYCLES**

**KETTENZAHNRAD FÜR EIN FAHRRAD**

**ROUE DENTÉE POUR SYSTÈMES DE TRANSMISSION DE MOUVEMENT SUR CYCLES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2015 IT UB20151485**

(43) Date of publication of application:
**25.04.2018 Bulletin 2018/17**

(73) Proprietor: **Briosi, Antonello
38068 Rovereto (TN) (IT)**

(72) Inventor: **Briosi, Antonello
38068 Rovereto (TN) (IT)**

(74) Representative: **Brunacci, Marco
BRUNACCI & PARTNERS S.r.l.
Via Pietro Giardini, 625
41125 Modena (MO) (IT)**

(56) References cited:
**WO-A1-93/07044          WO-A1-2015/030576
US-A- 3 899 932          US-A- 4 865 577**

## Description

Technical Field

The present invention relates to a gearwheel for motion transmission systems onto cycles.

Background Art

In the present treatise, the word "cycles" means vehicles with two or more wheels functioning exclusively by muscular propulsion, by means of pedals or similar devices, operated by people on the vehicle.

Also considered as cycles are bicycles with pedal assistance, equipped with an auxiliary electric motor the output of which is progressively reduced and finally cut off when the vehicle reaches a predetermined speed or sooner, if the cyclist stops pedaling.

The transmission systems commonly used in bicycles and cycles in general envisage the use of a cogwheel mechanism associated with the vehicle wheels. The cogwheel mechanism sometimes consists in a first set of gears called "multiplier", mounted rotatably to the vehicle frame, and in a second set of gears called "sprocket", generally associated with the rear wheel.

Both sets of gears consist of several cogwheels of different dimensions arranged to form a stack of gears having decreasing diameter.

The multiplier is generally the driving set of gears, i.e., the set of gears which is mobilized by means of cranksets to set the vehicle in motion.

The multiplier is kinematically connected to the sprocket by means of a chain adapted to drag in motion the sprocket itself, and therefore also the rear wheel of the bicycle.

The cogwheels which are part of the multiplier are commonly called "gearwheels".

Different types of gearwheel exist having several shapes.

A first type of gearwheel, and also the most common, is the circular gearwheel. These have the drawback of not fully supporting the pedaling motion of a user. The thrust produced by a user's leg, in fact, is not constant, but is minimum at the top and bottom dead centers and is maximum at the point halfway between these centers.

The top dead center (TDC) is the one corresponding to the pedal placed vertically to occupy the position of maximum reachable height.

The bottom dead center (BDC), instead, is offset by 180° with respect to the top dead center and is that corresponding to the pedal placed vertically to occupy the position of minimum reachable height.

Referring to a single leg, this provides a thrust to the pedals passing from TDC to BDC.

Conversely, when the pedal returns from BDC to TDC, the leg does not provide thrust.

It is, therefore, possible to split pedaling into an active phase, when the pedal moves from TDC to BDC rotating from 0° to 180°, and a passive phase, when the pedal moves from BDC to TDC rotating from 180° to 360°.

Over the course of the active thrust phase, the user's leg does not produce a steady development of power because the biomechanics of the joints involved are such as to develop a power which is maximum at approximately halfway between TDC and BDC and minimum at these centers.

The power supplied by the leg, furthermore, is not developed regularly, but varies according to the angle defined by the knee joint and the user's position.

A drawback of circular gearwheels is linked to the fact that, being the radius of the gearwheel constant, the resistance to motion, i.e., the force to be overcome to put the vehicle in motion, develops regardless of the position of the gearwheel.

Because of this, at the TDC and BDC, where the leg is weaker, a slowdown occurs of the angular velocity and therefore more discontinuous and less fluid pedaling.

All this involves a suffering of the muscles at this pedaling phase, especially as regards the outer musculus vastus of the thigh, thus negatively affecting the user, both because of an increase in the probability of incurring injury, and because of the negative effect which such muscle pain has on performance. Besides circular gearwheels, a second type of gearwheel is also known defined with ellipsoid or ovoid shapes or with dual cam, and adapted to minimize the drawbacks of circular gearwheels.

In particular, these gearwheels have variable radius on different angular positions and are installed in such a way that to TDC and BDC corresponds the minimum radius and to halfway between TDC and BDC corresponds the maximum radius.

This way resistance to motion is minimum where the leg is weaker and maximum where the leg is stronger.

However, this second type of gearwheel also has drawbacks inasmuch as the radius defining the geometry does not vary in proportion to the force that the leg is able to exert during the thrust phase, resulting, in this case as well, in a pedaling which is not very smooth, of low performance and, in some cases, uncomfortable, since the user has to readjust his/her position and pedaling style according to the shape of the gearwheel.

Description of the Invention

The main aim of the present invention is to provide a gearwheel for motion transmission systems onto cycles which permits adapting the resistance to motion of the vehicle to the power developed by the user's leg.

One object of the present invention is to provide a gearwheel for motion transmission systems onto cycles which permits smoother and more regular pedaling.

Another object of the present invention is to provide a gearwheel for motion transmission systems onto cycles which permits overcoming the mentioned drawbacks of the prior art within the scope of a simple, rational, easy and efficient to use as well as affordable solution.

Another object of the present invention is to provide a gearwheel for motion transmission systems onto cycles which permits reducing the number of any accidental falling off of the chain from the gearwheel itself during normal use. The above mentioned objects are achieved by this gearwheel for motion transmission systems onto cycles having the characteristics of claim 1.

Other gearwheels having different shapes are known from WO93/07044, disclosing the preamble of claim 1, and WO 2015/030576, US 4 865 577 and US 3 899 932.

Brief Description of the Drawings

Other characteristics and advantages of the present invention will appear better evident from the description of two preferred, but not exclusive, embodiments of a gearwheel for motion transmission systems onto cycles, illustrated by way of an indicative, but non-limiting, example in the accompanying drawings, wherein :

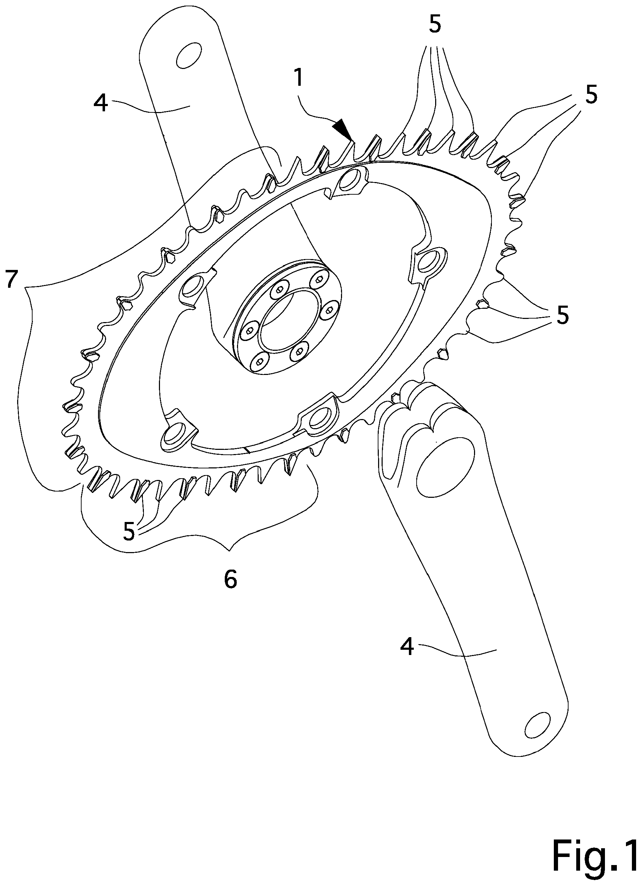

Figure 1 is an axonometric view of the gearwheel according to the invention;
Figure 2 is a plan view of a first embodiment of the gearwheel according to the invention;
Figure 3 is a plan view of a second embodiment of the gearwheel according to the invention;

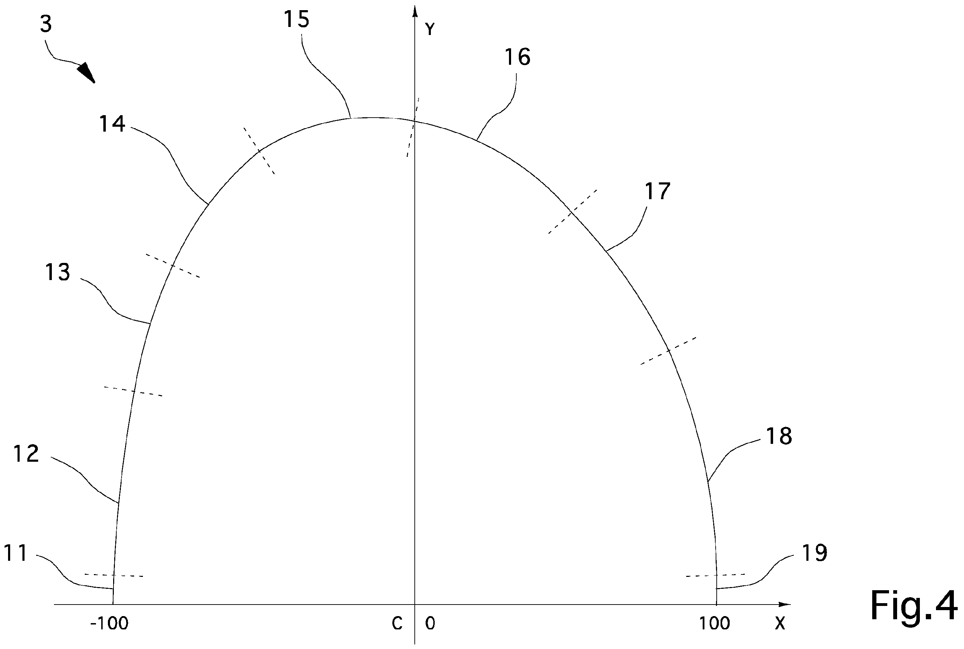

Figure 4 is a schematic view of a detail of the gearwheel according to the invention.

Embodiments of the Invention

With particular reference to such figures, reference number 1 globally designates a gearwheel for motion transmission onto cycles.

The gearwheel 1 is rotatable with respect to its center of rotation C and can be split into two gearwheel halves 2 centrally symmetrical with respect to the center of rotation itself.

Conveniently, each of the gearwheel halves 2 comprises a toothed peripheral edge having a plurality of projecting elements 5, commonly called "teeth". There are regularly spaced the one from the other by portions of the dragging profile 3.

In particular, such teeth 5 define concavities wherein a flexible element closed in a loop, or commonly called "chain", is intended to rest, for the dragging in motion of a cycle.

The projecting part of the tooth 5 is adapted to drag the flexible element in motion for a certain part of the pedaling.

Both gearwheel halves 2, in fact, have a dragging profile 3 adapted to enter at least partially in contact with the chain for the dragging in motion of a cycle. The dragging profile 3 therefore coincides with the "primitive profile" of the toothed gearwheel halves 2.

According to the invention, the dragging profile 3 comprises at least five sections having different curvatures between them.

The aforementioned profile also comprises a larger diameter and a smaller diameter whose ratio has a value. According to the invention, the above value is equal to 1.3574. In the present embodiment, the profile has a first section 11, a second section 12, a third section 13, a fourth section 14, a fifth section 15, a sixth section 16, a seventh section 17, an eight section 18 and a ninth section 19 connected to one another in sequence, having different curves and defined by respective planar curves expressible in the plane by means of sixth-degree polynomials.

In particular, these curves fall into the category of "sestic curves" and are curves of the following type:

$$y = a_1 x^6 + a_2 x^5 + a_3 x^4 + a_4 x^3 + a_5 x^2 + a_6 x + a_7$$

where $a_n$ with $n=1, 2, 3, 4, 5, 6, 7$ are known terms and $x, y$ the variables chosen for the graphic representation of such curves in the plane.

In this regard it is specified that, in the present treatise, the sestic curves defining the dragging profile 3 are defined with respect to the Cartesian reference system x, y, the origin of which coincides with the center of rotation C and to the minimum radius of the gearwheel half an arbitrary scale value of 100 has been given.

More in particular, the interception point of the curve for both x = -100 and for x = 100 is equal to y = 0.

The first section 11 is defined by the curve

$$y = (0)x^6$$
$$+(0)x^5$$
$$+(0)x^4$$
$$+(0)x^3$$
$$+(0)x^2$$
$$+(2.43685974131053 * 10^1)x$$
$$+(2.43685974131053 * 10^3)$$

with x that belongs to the range of values comprised between ($x_0$ =-100, $x_1$ =-99.9).

The second section 12 is defined by the curve

$$y = (-2.0484351380734 * 10^{-4})x^6$$
$$+(-1.13122348471926 * 10^{-1})x^5$$
$$+(-2.60131220581469 * 10^1)x^4$$
$$+(-3.18832920426384 * 10^3)x^3$$
$$+(-2.19676520438293 * 10^5)x^2$$
$$+(-8.06733158945192 * 10^6)x$$
$$+(-1.23364921739830 * 10^8)$$

with x that belongs to the range of values comprised between ($x_1$ =-99.9, $x_2$ =-9.250048793*$10^1$).

The third section 13 is defined by the curve

$$y = (-1.7981184603777 * 10^{-8})x^6$$

$$+(-6.82076299614828 * 10^{-6})x^5$$

$$+(-1.06839175019891 * 10^{-3})x^4$$

$$+(-8.82345747346134 * 10^{-2})x^3$$

$$+(-4.06099748597368 * 1)x^2$$

$$+(-9.85445852908518 * 10^1)x$$

$$+(-8.49774277311171 * 10^2)$$

with x that belongs to the range of values comprised between ($x_2$=-9.250048793*$10^1$, $x_3$=-5.73195646810042*$10^1$)

The fourth section 14 is defined by the curve

$$y = (-1.09748855402908 * 10^{-10})x^6$$

$$+(-1.43258624805134 * 10^{-9})x^5$$

$$+(-1.07209710609252 * 10^{-6})x^4$$

$$+(1.20396736523094 * 10^{-4})x^3$$

$$+(-1.31217653209468 * 10^{-3})x^2$$

$$+(-1.10301356697461 * 10^{-3})x$$

$$+(1.34734234936338 * 10^2)$$

with x that belongs to the range of values comprised between ($x_3$=-5.73195646810042*$10^1$, $x_4$=-1).

The fifth section 15 is defined by the curve

$$y = (0)x^6$$

$$+(0)x^5$$

$$+(0)x^4$$

$$+(0)x^3$$

$$+(0)x^2$$

$$+(-1.28328322234779 * 10^{-1})x$$

$$+(1.3471477647095200 * 10^2)$$

with x that belongs to the range of values comprised between ($x_4$=-1, $x_5$=0). The sixth section 16 is defined by the curve

$$y = (1.06497537351313 * 10^{-10})x^6$$

$$+(-1.75920494838167 * 10^{-8})x^5$$

$$+(1.17118126041760 * 10^{-6})x^4$$

$$+(-4.38563686202542 * 10^{-5})x^3$$

$$+(-6.33628200012026 * 10^{-3})x^2$$

$$+(-1.11203241802286 * 10^{-1})x$$

$$+(1.34714776470952 * 10^2)$$

with x that belongs to the range of values comprised between ($x_5$=0, $x_6$=5.74149838911238*10$^1$).
The seventh section 17 is defined by the curve

$$y = (-5.33273355491498 * 10^{-8})x^6$$

$$+(2.25619449828721 * 10^{-5})x^5$$

$$+(-3.95657580445826 * 10^{-3})x^4$$

$$+(3.67739637477149 * 10^{-1})x^3$$

$$+(-1.91001216673726 * 10^{1})x^2$$

$$+(5.24683293546421 * 10^{2})x$$

$$+(-5.82912465746677 * 10^{3})$$

with x that belongs to the range of values comprised between ($x_6$=5.74149838911238*$10^1$, $x_7$=9.828620998080150*$10^1$).

The eighth section 18 is defined by the curve

$$y = (0)x^6$$

$$+(0)x^5$$

$$(-3.64332093039957 * 1)x^4$$

$$+(1.43647113232435 * 10^{3})x^3$$

$$+(-2.1238365829683 * 10^{5})x^2$$

$$+(+1.39558401341522 * 10^{7})x$$

$$+(-3.43886467319037 * 10^{8})$$

with x that belongs to the range of values comprised between ($x_7$=9.828620998080150*$10^1$, $x_8$=99.99).

The ninth section 19 is defined by the curve

$$y = (0)x^6$$

$$+(0)x^5$$

$$(0)x^4$$

$$+(0)x^3$$

$$+(0)x^2$$

$$+(-2.821570196154020 * 10^2)x$$

$$+(2.821570196154020 * 10^4)$$

with x that belongs to the range of values comprised between ($x_8$=99.9, $x_9$ =+100).

Solutions cannot be ruled out which envisage the use of different curves, not necessarily sestic, having a geometrically similar pattern in the x, y plane.

In particular, all the curves are included having the same shape of the curves mentioned above and represented in scale with respect to these.

The dragging profile 3 so defined allows adapting the radius of the gearwheel, and therefore the resistance to motion provided by the vehicle, with respect to the thrust produced by the user on the basis of biomechanics of the leg. Advantageously, the projecting elements 5 comprise a first type of teeth 6 and a second type of teeth 7.

The first type of teeth 6 is of pointed shape and is adapted to better guide the flexible elements mainly during the phase of decreasing thrust, i.e. during the phase in which the variable radius of the gearwheel tends to decrease upon rotating of same.

The second type of teeth 7 is of more rounded shape and is adapted to drag the flexible element in the remaining phases, i.e. when the variable radius of the gearwheel tends to increase and therefore during the phase of increasing thrust. Both types have the same width at the contact portion 3.

The first type of teeth 6, furthermore, are higher than those of the second type 7 and permit better ensuring the guidance of the chain in the phases in which the falling off of the chain is more frequent, i.e., in the phases wherein the contact force between the chain and the gearwheel tends to decrease (phase of decreasing thrust).

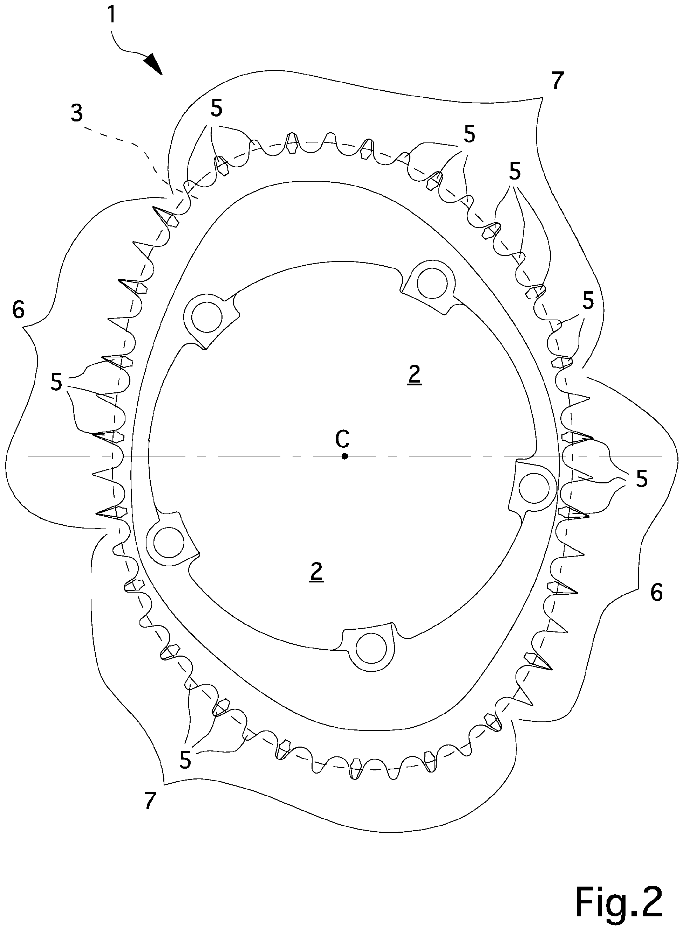

In a first embodiment, shown in figure 2, the gearwheel 1 has forty-six projecting elements 5.

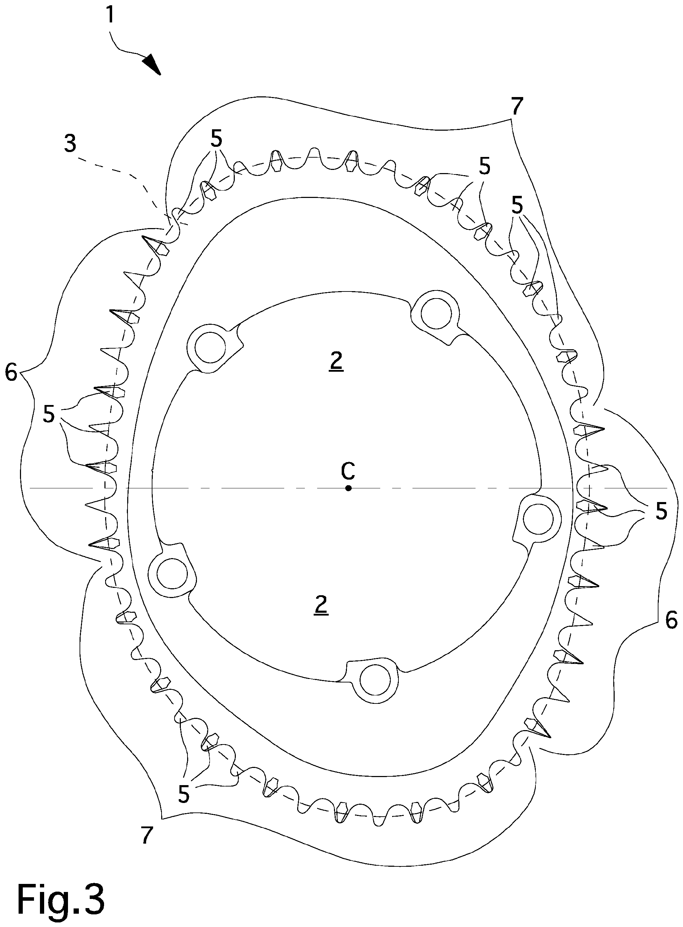

In a second embodiment, shown in figure 3, the gearwheel 1 has forty-eight projecting elements 5.

Different solutions cannot however be ruled out wherein the number of projecting elements is in a range between 28 and 54 projecting elements 5.

In any case, the gearwheel 1, rotating around the center of rotation C, causes a change in the radius according to the dragging profile 3, adapting itself, therefore, to the biomechanics of the joint.

The projecting elements 5, on the other hand, are arranged along the peripheral edge of the gearwheel 1 in such a way that the first type 6 comes into operation once it has crossed the larger radius and until it more or less reaches the smaller radius.

This way the possibility is minimized of the chain falling off precisely at the points where this occurs most frequently.

In practice it has been ascertained that the described invention achieves the intended objects and in particular the fact is underlined that the gearwheel for motion transmission onto cycles permits adapting the resistance to motion of the vehicle to the power developed by the user's leg.

The particular dragging profile, in fact, allows, during pedaling, a variation of the radius of the gearwheel proportional to the variation of the thrust which the leg is able to exert on the crankset.

The result is smoother and more regular pedaling, with the user able to adapt easily, without compromising his/her muscles or leg joints.

**Claims**

1. Gearwheel (1) for motion transmission systems onto cycles which is rotatable with respect to its center of rotation (C) and which comprises two gearwheel halves (2) centrally symmetrical with respect to said center of rotation (C) and both having a dragging profile (3) adapted to enter at least partially in contact with a flexible element closed in a loop for the driving in motion of a cycle, wherein said dragging profile (3) comprises at least five sections having different curvatures between them and comprises a larger diameter and a smaller diameter whose ratio has a value between 1.31 and 1.39, **characterized by** the fact that it comprises a larger diameter and a smaller diameter whose ratio is equal to 1.3574.

2. Gearwheel (1) according to claim 1, **characterized by** the fact that said sections are defined by respective planar curves expressible in the plane by means of sixth-degree polynomials.

3. Gearwheel (1) according to one or more of the preceding claims, **characterized by** the fact that said sections comprise a first section (11) defined by the curve:

$$y = (0)x^6$$

$$+(0)x^5$$

$$+(0)x^4$$

$$+(0)x^3$$

$$+(0)x^2$$

$$+(2.43685974131053 * 10^1)x$$

$$+(2.43685974131053 * 10^3)$$

with x that belongs to the range of values comprised between ($x_0$ =-100, $x_1$ =-99.9).

4. Gearwheel (1) according to one or more of the preceding claims, **characterized by** the fact that said sections comprise a second section (12) defined by the curve:

$$y = (-2.0484351380734 * 10^{-4})x^6$$

$$+(-1.13122348471926 * 10^{-1})x^5$$

$$+(-2.60131220581469 * 10^1)x^4$$

$$+(-3.18832920426384 * 10^3)x^3$$

$$+(-2.19676520438293 * 10^5)x^2$$

$$+(-8.06733158945192 * 10^6)x$$

$$+(-1.23364921739830 * 10^8)$$

with x that belongs to the range of values comprised between ($x_1$ =-99.9, =-9.250048793*$10^1$).

5. Gearwheel (1) according to one or more of the preceding claims, **characterized by** the fact that said sections comprise a third section (13) defined by the curve:

$$y = (-1.79811846037\,77 * 10^{-8})x^6$$

$$+(-6.82076299614828 * 10^{-6})x^5$$

$$+(-1.068391750\,19891 * 10^{-3})x^4$$

$$+(-8.823457473\,46134 * 10^{-2})x^3$$

$$+(-4.06099748597368 * 1)x^2$$

$$+(-9.85445852908518 * 10^1)x$$

$$+(-8.49774277311171 * 10^2)$$

with x that belongs to the range of values comprised between ($x_2$=-9.250048793*$10^1$, $x_3$=-5.73195646810042*$10^1$).

6. Gearwheel (1) according to one or more of the preceding claims, **characterized by** the fact that said sections comprise a fourth section (14) defined by the curve:

$$y = (-1.09748855402908 * 10^{-10})x^6$$

$$+(-1.43258624805134 * 10^{-9})x^5$$

$$+(-1.07209710609252 * 10^{-6})x^4$$

$$+(1.20396736523094 * 10^{-4})x^3$$

$$+(-1.31217653209468 * 10^{-3})x^2$$

$$+(-1.10301356697461 * 10^{-1})x$$

$$+(1.34734234936338 * 10^2)$$

with x that belongs to the range of values comprised between ($x_3$=-5.73195646810042*$10^1$, $x_4$=-1).

7. Gearwheel (1) according to one or more of the preceding claims, **characterized by** the fact that said sections comprise a fifth section (15) defined by the curve:

$$y = (0)x^6$$

$$+(0)x^5$$

$$+(0)x^4$$

$$+(0)x^3$$

$$+(0)x^2$$

$$+(-1.28328322234779 * 10^{-1})x$$

$$+(1.3471477647095200 * 10^2)$$

with x that belongs to the range of values comprised between ($x_4$=-1, xs=0).

8. Gearwheel (1) according to one or more of the preceding claims, **characterized by** the fact that said sections comprise a sixth section (16) defined by the curve:

$$y = (1.06497537351313 * 10^{-10})x^6$$

$$+(-1.75920494838167 * 10^{-8})x^5$$

$$+(1.17118126041760 * 10^{-6})x^4$$

$$+(-4.38563686202542 * 10^{-5})x^3$$

$$+(-6.33628200012026 * 10^{-3})x^2$$

$$+(-1.11203241802286 * 10^{-1})x$$

$$+(1.34714776470952 * 10^2)$$

with x that belongs to the range of values comprised between ($x_5$=0, $x_6$=5.74149838911238*10^1).

9. Gearwheel (1) according to one or more of the preceding claims, **characterized by** the fact that said sections comprise a seventh section (17) defined by the curve:

$$y = (-5.33273355491498 * 10^{-8})x^6$$

$$+(2.25619449828721 * 10^{-5})x^5$$

$$+(-3.95657580445826 * 10^{-3})x^4$$

$$+(3.67739637477149 * 10^{-1})x^3$$

$$+(-1.91001216673726 * 10^1)x^2$$

$$+(5.24683293546421 * 10^2)x$$

$$+(-5.82912465746677 * 10^3)$$

with x that belongs to the range of values comprised between ($x_6$=5.74149838911238*10$^1$, $x_7$=9.828620998080150*10$^1$).

10. Gearwheel (1) according to one or more of the preceding claims, **characterized by** the fact that said sections comprise an eighth section (18) defined by the curve:

$$y = (0)x^6$$

$$+(0)x^5$$

$$(-3.64332093039957 * 1)x^4$$

$$+(1.43647113232435 * 10^3)x^3$$

$$+(-2.1238365829683 * 10^5)x^2$$

$$+(+1.39558401341522 * 10^7)x$$

$$+(-3.43886467319037 * 10^8)$$

with x that belongs to the range of values comprised between ($x_7$=9.828620998080150*10$^1$, $x_8$=99.99).

11. Gearwheel (1) according to one or more of the preceding claims, **characterized by** the fact that said sections comprise a ninth section (19) defined by the curve:

$$y = (0)x^6$$

$$+(0)x^5$$

$$(0)x^4$$

$$+(0)x^3$$

$$+(0)x^2$$

$$+(-2.821570196154020 * 10^2)x$$

$$+(2.821570196154020 * 10^4)$$

with x that belongs to the range of values comprised between ($x_8$=99.9, $x_9$ =+100).

12. Gearwheel (1) according to one or more of the preceding claims, **characterized by** the fact that each of said gearwheel halves (2) comprises a toothed peripheral edge having a plurality of projecting elements (5) spaced the one from the other by portions of said dragging profile (3).

13. Gearwheel (1) according to one or more of the preceding claims, **characterized by** the fact that said projecting elements (5) comprise at least a first type of teeth (6) of pointed shape adapted to guide said flexible element in a phase of decreasing thrust, and at least a second type of teeth (7) of rounded shape adapted to guide said flexible element in a phase of increasing thrust.

**Patentansprüche**

1. Zahnrad (1) für Bewegungsübertragungssysteme auf Fahrrädern, das in Bezug auf seinen Drehmittelpunkt (C) drehbar ist und zwei Zahnradhälften (2) umfasst, die in Bezug auf den Drehmittelpunkt (C) mittig symmetrisch sind und beide ein Schleppprofil (3) aufweisen, das ausgebildet ist, zumindest teilweise in Kontakt mit einem flexiblen Element zu treten, das in einer Schleife für den Bewegungsantrieb eines Fahrrads geschlossen ist, wobei das Schleppprofil (3) mindestens fünf Abschnitte umfasst, die untereinander unterschiedliche Krümmungen aufweisen, und einen größeren Durchmesser und einen kleineren Durchmesser umfasst, deren Verhältnis einen Wert zwischen 1.31 und 1.39 hat, **dadurch gekennzeichnet, dass** es einen größeren Durchmesser und einen kleineren Durchmesser umfasst, deren Verhältnis gleich 1.3574 ist.

2. Zahnrad (1) nach Anspruch 1, **dadurch gekennzeichnet, dass** die Abschnitte durch entsprechende ebene Kurven definiert sind, die in der Ebene durch Polynome sechsten Grades beschreibbar sind.

3. Zahnrad (1) nach einem oder mehreren der vorhergehenden Ansprüche, **dadurch gekennzeichnet, dass** die Abschnitte einen ersten Abschnitt (11) umfassen, der durch die Kurve definiert ist:

$$y = (0)x^6$$
$$+(0)x^5$$
$$+(0)x^4$$
$$+(0)x^3$$
$$+(0)x^2$$
$$+(2.43685974131053 * 10^1)x$$
$$+(2.43685974131053 * 10^3)$$

mit x, das zu dem Wertebereich zwischen ($x_0$ = -100, $x_1$ = -99.9) gehört.

4.  Zahnrad (1) nach einem oder mehreren der vorhergehenden Ansprüche, **dadurch gekennzeichnet, dass** die Abschnitte einen zweiten Abschnitt (12) umfassen, der durch die Kurve definiert ist:

$$y = (-2.0484351380734 * 10^{-4})x^6$$
$$+(-1.13122348471926 * 10^{-1})x^5$$
$$+(-2.60131220581469 * 10^1)x^4$$
$$+(-3.18832920426384 * 10^3)x^3$$
$$+(-2.19676520438293 * 10^5)x^2$$
$$+(-8.06733158945192 * 10^6)x$$
$$+(-1.23364921739830 * 10^8)$$

mit x, das zu dem Wertebereich zwischen ($x_1$ = -99.9, = -9.250048793 * $10^1$) gehört.

5.  Zahnrad (1) nach einem oder mehreren der vorhergehenden Ansprüche, **dadurch gekennzeichnet, dass** die Abschnitte einen dritten Abschnitt (13) umfassen, der durch die Kurve definiert ist:

$$y = (-1.7981184603777 * 10^{-8})x^6$$
$$+(-6.82076299614828 * 10^{-6})x^5$$
$$+(-1.06839175019891 * 10^{-3})x^4$$
$$+(-8.82345747346134 * 10^{-2})x^3$$
$$+(-4.06099748597368 * 1)x^2$$
$$+(-9.85445852908518 * 10^1)x$$
$$+(-8.49774277311171 * 10^2)$$

mit x, das zu dem Wertebereich zwischen ($x_2$ = -9.250048793 * $10^1$, $x_3$ = -5.73195646810042 * $10^1$) gehört.

6.  Zahnrad (1) nach einem oder mehreren der vorhergehenden Ansprüche, **dadurch gekennzeichnet, dass** die Abschnitte einen vierten Abschnitt (14) umfassen, der durch die Kurve definiert ist:

$$y = (-1.09748855402908 * 10^{-10})x^6$$
$$+(-1.43258624805134 * 10^{-9})x^5$$
$$+(-1.07209710609252 * 10^{-6})x^4$$
$$+(1.20396736523094 * 10^{-4})x^3$$
$$+(-1.31217653209468 * 10^{-3})x^2$$
$$+(-1.10301356697461 * 10^{-1})x$$
$$+(1.34734234936338 * 10^2)$$

mit x, das zu dem Wertebereich zwischen ($x_3$ = -5.73195646810042 * $10^1$, $x_4$ = -1) gehört.

7. Zahnrad (1) nach einem oder mehreren der vorhergehenden Ansprüche, **dadurch gekennzeichnet, dass** die Abschnitte einen fünften Abschnitt (15) umfassen, der durch die Kurve definiert ist:

$$y = (0)x^6$$
$$+(0)x^5$$
$$+(0)x^4$$
$$+(0)x^3$$
$$+(0)x^2$$
$$+(-1.28328322234779 * 10^{-1})x$$
$$+(1.3471477647095200 * 10^2)$$

mit x, das zu dem Wertebereich zwischen ($x_4$ = -1, $x_5$ = 0) gehört.

8. Zahnrad (1) nach einem oder mehreren der vorhergehenden Ansprüche, **dadurch gekennzeichnet, dass** die Abschnitte einen sechsten Abschnitt (16) umfassen, der durch die Kurve definiert ist:

$$y = (1.06497537351313 * 10^{-10})x^6$$
$$+(-1.75920494838167 * 10^{-8})x^5$$
$$+(1.17118126041760 * 10^{-6})x^4$$
$$+(-4.38563686202542 * 10^{-5})x^3$$
$$+(-6.33628200012026 * 10^{-3})x^2$$
$$+(-1.11203241802286 * 10^{-1})x$$
$$+(1.34714776470952 * 10^2)$$

mit x, das zu dem Wertebereich zwischen ($x_5$ = 0, $x_6$ = 5.74149838911238 * $10^1$) gehört.

9. Zahnrad (1) nach einem oder mehreren der vorhergehenden Ansprüche, **dadurch gekennzeichnet, dass** die Abschnitte einen siebten Abschnitt (17) umfassen, der durch die Kurve definiert ist:

$$y = (-5.33273355491498 * 10^{-8})x^6$$
$$+(2.25619449828721 * 10^{-5})x^5$$
$$+(-3.95657580445826 * 10^{-3})x^4$$
$$+(3.67739637477149 * 10^{-1})x^3$$
$$+(-1.91001216673726 * 10^1)x^2$$
$$+(5.24683293546421 * 10^2)x$$
$$+(-5.82912465746677 * 10^3)$$

mit x, das zu dem Wertebereich zwischen ($x_6$= 5.74149838911238 * $10^1$, $x_7$= 9.828620998080150 * $10^1$) gehört.

10. Zahnrad (1) nach einem oder mehreren der vorhergehenden Ansprüche, **dadurch gekennzeichnet, dass** die Abschnitte einen achten Abschnitt (18) umfassen, der durch die Kurve definiert ist:

$$y = (0)x^6$$
$$+(0)x^5$$
$$+(-3.64332093039957 * 1)x^4$$
$$+(1.43647113232435 * 10^3)x^3$$
$$+(-2.1238365829683 * 10^5)x^2$$
$$+(+1.39558401341522 * 10^7)x$$
$$+(-3.43886467319037 * 10^8)$$

mit x, das zu dem Wertebereich zwischen ($x_7$= 9.828620998080150 * $10^1$, $x_8$= 99.99) gehört.

11. Zahnrad (1) nach einem oder mehreren der vorhergehenden Ansprüche, **dadurch gekennzeichnet, dass** die Abschnitte einen neunten Abschnitt (19) umfassen, der durch die Kurve definiert ist:

$$y = (0)x^6$$
$$+(0)x^5$$
$$+(0)x^4$$
$$+(0)x^3$$
$$+(0)x^2$$
$$+(-2.821570196154020 * 10^2)x$$
$$+(2.821570196154020 * 10^4)$$

mit x, das zu dem Wertebereich zwischen ($x_8$= 99.9, $x_9$= +100) gehört.

12. Zahnrad (1) nach einem oder mehreren der vorhergehenden Ansprüche, **dadurch gekennzeichnet, dass** jede der Zahnradhälften (2) einen gezahnten Umfangsrand mit einer Vielzahl von vorstehenden Elementen (5) aufweist, die durch Abschnitte des Schleppprofils (3) zueinander beabstandet sind.

**13.** Zahnrad (1) nach einem oder mehreren der vorhergehenden Ansprüche, **dadurch gekennzeichnet, dass** die vorstehenden Elemente (5) mindestens eine erste Art von Zähnen (6) mit spitzer Form, die geeignet sind, das flexible Element in einer Phase mit abnehmender Schubkraft zu führen, und mindestens eine zweite Art von Zähnen (7) mit abgerundeter Form umfassen, die geeignet sind, das flexible Element in einer Phase mit zunehmender Schubkraft zu führen.

**Revendications**

**1.** Roue dentée (1) pour des systèmes de transmission de mouvement sur des cycles, qui est rotative par rapport à son centre de rotation (C) et qui comprend deux moitiés de roue dentée (2) centralement symétriques par rapport audit centre de rotation (C) et ayant toutes les deux un profil de traîne (3) apte à entrer au moins partiellement en contact avec un élément souple fermé dans une boucle pour la mise en mouvement d'un cycle, dans lequel ledit profil de traîne (3) comprend au moins cinq sections ayant des courbures différentes entre elles et comprend un diamètre supérieur et un diamètre inférieur dont le rapport a une valeur entre 1.31 et 1.39, **caractérisée par le fait qu'**elle comprend un diamètre supérieur et un diamètre inférieur dont le rapport est égal à 1.3574.

**2.** Roue dentée (1) selon la revendication 1, **caractérisée par le fait que** lesdites sections sont définies par des courbes planes respectives pouvant être exprimées dans le plan au moyen de polynômes de sixième degré.

**3.** Roue dentée (1) selon une ou plusieurs des revendications précédentes, **caractérisée par le fait que** lesdites sections comprennent une première section (11) définie par la courbe :

$$y = (0)x^6$$
$$+(0)x^5$$
$$+(0)x^4$$
$$+(0)x^3$$
$$+(0)x^2$$
$$+(2.43685974131053 * 10^1)x$$
$$+(2.43685974131053 * 10^3)$$

avec x qui appartient à la plage de valeurs comprises entre ($x_0$ = -100, $x_1$ = -99.9).

**4.** Roue dentée (1) selon une ou plusieurs des revendications précédentes, **caractérisée par le fait que** lesdites sections comprennent une deuxième section (12) définie par la courbe :

$$y = (-2.0484351380734 * 10^{-4})x^6$$
$$+(-1.13122348471926 * 10^{-1})x^5$$
$$+(-2.60131220581469 * 10^1)x^4$$
$$+(-3.18832920426384 * 10^3)x^3$$
$$+(-2.19676520438293 * 10^5)x^2$$
$$+(-8.06733158945192 * 10^6)x$$
$$+(-1.23364921739830 * 10^8)$$

avec x qui appartient à la plage de valeurs comprises entre ($x_1$ = -99.9, = - 9.250048793 * 10^1).

**5.** Roue dentée (1) selon une ou plusieurs des revendications précédentes, **caractérisée par le fait que** lesdites sections comprennent une troisième section (13) définie par la courbe :

$$y = (-1.7981184603777 * 10^{-8})x^6$$

$$+(-6.82076299614828 * 10^{-6})x^5$$

$$+(-1.06839175019891 * 10^{-3})x^4$$

$$+(-8.82345747346134 * 10^{-2})x^3$$

$$+(-4.06099748597368 * 1)x^2$$

$$+(-9.85445852908518 * 10^{1})x$$

$$+(-8.49774277311171 * 10^{2})$$

avec x qui appartient à la plage de valeurs comprises entre ($x_2$ = -9.250048793 * $10^1$, $x_3$ = -5.73195646810042 * $10^1$).

**6.** Roue dentée (1) selon une ou plusieurs des revendications précédentes, **caractérisée par le fait que** lesdites sections comprennent une quatrième section (14) définie par la courbe :

$$y = (-1.09748855402908 * 10^{-10})x^6$$

$$+(-1.43258624805134 * 10^{-9})x^5$$

$$+(-1.07209710609252 * 10^{-6})x^4$$

$$+(1.20396736523094 * 10^{-4})x^3$$

$$+(-1.31217653209468 * 10^{-3})x^2$$

$$+(-1.10301356697461 * 10^{-1})x$$

$$+(1.34734234936338 * 10^{2})$$

avec x qui appartient à la plage de valeurs comprises entre ($x_3$ = -5.73195646810042 * $10^1$, $x_4$ = -1).

**7.** Roue dentée (1) selon une ou plusieurs des revendications précédentes, **caractérisée par le fait que** lesdites sections comprennent une cinquième section (15) définie par la courbe :

$$y = (0)x^6$$

$$+(0)x^5$$

$$+(0)x^4$$

$$+(0)x^3$$

$$+(0)x^2$$

$$+(-1.28328322234779 * 10^{-1})x$$

$$+(1.3471477647095200 * 10^{2})$$

avec x qui appartient à la plage de valeurs comprises entre ($x_4$ = -1, $x_5$ = 0).

**8.** Roue dentée (1) selon une ou plusieurs des revendications précédentes, **caractérisée par le fait que** lesdites sections comprennent une sixième section (16) définie par la courbe :

$$y = (1.064497537351313 * 10^{-10})x^6$$
$$+(-1.75920494838167 * 10^{-8})x^5$$
$$+(1.17118126041760 * 10^{-6})x^4$$
$$+(-4.38563686202542 * 10^{-5})x^3$$
$$+(-6.33628200012026 * 10^{-3})x^2$$
$$+(-1.11203241802286 * 10^{-1})x$$
$$+(1.34714776470952* 10^2)$$

avec x qui appartient à la plage de valeurs comprises entre ($x_5 = 0$, $x_6 = 5.74149838911238 * 10^1$).

**9.** Roue dentée (1) selon une ou plusieurs des revendications précédentes, **caractérisée par le fait que** lesdites sections comprennent une septième section (17) définie par la courbe :

$$y = (-5.33273355491498 * 10^{-8})x^6$$
$$+(2.25619449828721 * 10^{-5})x^5$$
$$+(-3.95657580445826 * 10^{-3})x^4$$
$$+(3.67739637477149 * 10^{-1})x^3$$
$$+(-1.91001216673726 * 10^1)x^2$$
$$+(5.24683293546421 * 10^2)x$$
$$+(-5.82912465746677 * 10^3)$$

avec x qui appartient à la plage de valeurs comprises entre ($x_6 = 5.74149838911238 * 10^1$, $x_7 = 9.828620998080150 * 10^1$).

**10.** Roue dentée (1) selon une ou plusieurs des revendications précédentes, **caractérisée par le fait que** lesdites sections comprennent une huitième section (18) définie par la courbe :

$$y = (0)x^6$$
$$+(0)x^5$$
$$+(-3.64332093039957 * 1)x^4$$
$$+(1.43647113232435 * 10^3)x^3$$
$$+(-2.1238365829683 * 10^5)x^2$$
$$+(+1.39558401341522 * 10^7)x$$
$$+(-3.43886467319037 * 10^8)$$

avec x qui appartient à la plage de valeurs comprises entre ($x_7 = 9.828620998080150 * 10^1$, $x_8 = 99.99$).

**11.** Roue dentée (1) selon une ou plusieurs des revendications précédentes, **caractérisée par le fait que** lesdites sections comprennent une neuvième section (19) définie par la courbe :

$$y = (0)x^6$$
$$+(0)x^5$$
$$+(0)x^4$$
$$+(0)x^3$$
$$+(0)x^2$$
$$+(-2.821570196154020 * 10^2)x$$
$$+(2.8211570196154020 * 10^4)$$

avec x qui appartient à la plage de valeurs comprises entre ($x_8$ = 99.9, $x_9$ = +100).

**12.** Roue dentée (1) selon une ou plusieurs des revendications précédentes, **caractérisée par le fait que** chacune desdites moitiés de roue dentée (2) comprend un bord périphérique denté ayant une pluralité d'éléments saillants (5) espacés l'un de l'autre par des portions dudit profil de traîne (3).

**13.** Roue dentée (1) selon une ou plusieurs des revendications précédentes, **caractérisée par le fait que** lesdits éléments saillants (5) comprennent au moins un premier type de dents (6) de forme pointue apte à guider ledit élément souple dans une phase de poussée décroissante, et au moins un second type de dents (7) de forme arrondie apte à guider ledit élément souple dans une phase de poussée croissante.

Fig.1

Fig.2

Fig.3

Fig.4

**REFERENCES CITED IN THE DESCRIPTION**

**Patent documents cited in the description**

- WO 9307044 A
- WO 2015030576 A
- US 4865577 A
- US 3899932 A